# EUROPÄISCHE PATENTSCHRIFT

(11) **EP 1 015 947 B1**
(45) Veröffentlichungstag und Bekanntmachung des Hinweises auf die Patenterteilung: **25.06.2003**
(21) Anmeldenummer: 98948970.3
(22) Anmeldetag: 14.09.1998
(51) Int. Cl.: G05B 19/418

(54) **VERFAHREN UND VORRICHTUNG ZUR DURCHLAUFBEARBEITUNG VON PLATTENFÖRMIGEN WERKSTÜCKEN**
METHOD AND DEVICE FOR CONTINUOUS PROCESSING OF PLATE-SHAPED WORK PIECES
PROCEDE ET DISPOSITIF D'USINAGE EN CONTINU DE PIECES EN FORME DE PLAQUES

(30) Priorität: 18.09.1997 DE 19741163
(43) Veröffentlichungstag der Anmeldung: 05.07.2000
(73) Patentinhaber: HOMAG MASCHINENBAU AG, D-72296 Schopfloch (DE)
(72) Erfinder: FREY, Karl, D-72296 Schopfloch (DE); KALMBACH, Kurt, D-72275 Alpirsbach (DE); GRAF, Herbert, D-72280 Dornstetten (DE)
(74) Vertreter: HOFFMANN - EITLE
(86) Internationale Anmeldenummer: EP9805833
(87) Internationale Veröffentlichungsnummer: WO99014645

(56) Entgegenhaltungen:
- TSAI M C ET AL: "TRACKING CONTROL OF A CONVEYOR BELT: DESIGN AND EXPERIMENTS" IEEE TRANSACTIONS ON ROBOTICS AND AUTOMATION, Bd. 12, Nr. 1, 1. Februar 1996, Seiten 126-131, XP000559293
- PATENT ABSTRACTS OF JAPAN vol. 009, no. 314 (P-412), 10. Dezember 1985 & JP 60 144806 A (FANUC KK), 31. Juli 1985
- DIRNDORFER A: "INDUSTRIEROBOTER ZUR FOERDERBANDSYNCHRONEN MONTAGE" ROBOTERSYSTEME, Bd. 8, Nr. 1, 1. Januar 1992, Seiten 44-48, XP000266177

## Beschreibung

Die vorliegende Erfindung betrifft ein Verfahren zum Bearbeiten von plattenförmigen Werkstücken aus Holz, Holzwerkstoffen, Kunststoff oder dergleichen, bei dem die Werkstücke erfaßt, kontinuierlich entlang einer Bearbeitungsstrecke geführt und dabei mit mindestens einem an der Bearbeitungsstrecke entlanggeführten Mittel zur Bearbeitung in Eingriff gebracht werden. Die vorliegende Erfindung betrifft ferner eine Vorrichtung zum Bearbeiten von plattenförmigen Werkstoffen aus Holz, Holzwerkstoffen, Kunststoff oder dergleichen mit einer Fördereinrichtung zum Erfassen und kontinuierlichen Führen der Werkstücke entlang einer Bearbeitungsstrecke sowie mindestens einem im Bereich der Fördereinrichtung angeordneten Bearbeitungsaggregat mit mindestens einem Mittel, welches zur Bearbeitung eines Werkstückes mit diesem in Eingriff gebracht werden kann.

Verfahren dieser Art werden allgemein als Durchlaufverfahren und Vorrichtungen zur Durchführung dieses Verfahren allgemein als Durchlaufmaschinen bezeichnet. Sie eignen sich zur Durchlaufbearbeitung von in sich steifem Plattenmaterial, wie z.B. Vollholz- bzw. Spanplatten, sogenannten Tischlerplatten, Sperrholzplatten, Verbundplatten aus Holz, Kunststoff und Metall oder dergleichen.

Entlang der Bearbeitungsstrecke werden bei derartigen Verfahren und Vorrichtungen zur Durchlaufbearbeitung meist eine Vielzahl von stark unterschiedlichen Bearbeitungsvorgängen an den Werkstücken ausgeführt. Die mit den Werkstücken in Eingriff bringbaren Mittel können daher Fräser, Bohrer, Schleifbänder und andere Arten von spangebenden Werkzeugen sein. Sie können aber auch an den Werkstücken anzubringende, wie beispielsweise anzuleimende Kanten aus Holz oder Kunststoff sein. Darüber hinaus können die in Eingriff bringbaren Mittel auch Beschlagteile, Dübel, Handgriffe oder dergleichen an den Werkstücken anzubringende Elemente sein. Der Begriff "Eingriff" umfaßt daher in der vorliegenden Anmeldung nicht nur spangebende, sondern generell alle auf das jeweilige Werkstück einwirkende und seiner Fertigstellung dienende Vorgänge.

Bei bekannten Verfahrensweisen und Vorrichtungen zur Durchlaufbearbeitung ist zum Erfassen und Führen der Werkstücke eine meist als Band- oder Kettenförderer ausgestattete Fördereinrichtung vorgesehen, die einlaufseitig mit einer Werkstückerfassung und deren Vorschub mit einem Wegmeßsystem ausgestattet ist.

Die von der Werkstückerfassung und dem Wegmeßsystem erzeugten Signale werden einer zentralen Steuereinheit zugeführt, die diese Signale verarbeitet und in Abhängigkeit von der jeweils gewünschten Bearbeitung nach vorgegebenen Programmen die Bearbeitungsvorrichtungen oder Bearbeitungsaggregate und damit die Mittel zur Bearbeitung der Werkstücke steuert.

Im Einlaufbereich der Fördervorrichtung zu Beginn des Vorschubtransportes wird der zentralen Steuereinheit ein Signal über die Werkstückerfassung zugeführt. Die Steuereinheit verrechnet nun den von dem Wegmeßsystem ausgegebenen Vorschub unter Berücksichtigung der Vorschubgeschwindigkeit, um die Bewegung des Mittels zur Durchführung eines Eingriffes unter Berücksichtigung der Vorschubgeschwindigkeit des Werkstückes mit einem definierten Vorhalt zu starten.

Durch verschiedene Einflußgrößen, beispielsweise die Reaktionszeit der Steuerung, Schlupf beim Vorschub des Werkstückes, Toleranzen im Vorschubtransport und bei der Werkstückerfassung, lassen sich Eingriffe am durchlaufenden Werkstück nur innerhalb gewisser Präzisionsgrenzen durchführen. Die erreichbare Präzision am Werkstück hängt dabei auch von der Vorschubgeschwindigkeit des Werkstückes ab. Je höher die Vorschubgeschwindigkeit ist, desto gravierender sind die genannten Störeinflüsse, und desto geringer ist demgemäß die am Werkstück erreichbare Präzision.

Aus Tsai et al: "Tracking Control of a Conveyor Belt: Design and Experiments" in IEEE Transactions on Robotics and Automation, Bd. 12, Nr. 1, 1. Februar 1996, Seiten 126-131, XP000559293 ist ein Verfahren zum Bearbeiten von plattenförmigen Werkstücken bekannt, bei dem die Werkstücke erfaßt, kontinuierlich entlang einer Bearbeitungsstrecke geführt und dabei mit mindestens einem an der Bearbeitungsstrecke entlanggeführten Mittel zur Bearbeitung in Eingriff gebracht werden.

Aus US-A-4,914,725 ist eine Lesekopfsteuerung für ein optisches Plattenlaufwerk bekannt. Das Stellglied für den optischen Lesekopf ist in ein Grobstellglied und ein darauf angebrachtes Feinstellglied aufgeteilt. Für das Feinstellglied findet eine Positionssteuerung statt, welches wiederum das Grobstellglied steuert.

Aus Patent Abstracts of Japan, vol. 009, no. 314 (P-412), 10. Dezember 1985 & JP 60 144806 A (Fanuc KK), 31. Juli 1985 ist eine Nachführungssteuerung eines Roboters bekannt, der an einem Transportband arbeitet. Mittels einer Lichtschranke wird ein sich vorbeibewegendes Werkstück erfaßt. Dieser Vorgang löst eine Beschleunigung des Roboters auf eine höhere Geschwindigkeit als die Transportgeschwindigkeit des Bandes aus.

Aufgabe der vorliegenden Erfindung ist es, ein Verfahren und eine Vorrichtung zum Bearbeiten von plattenförmigen Werkstücken aus Holz im Durchlauf anzugeben, die es ermöglichen, die Präzision der Bearbeitung des Werkstückes zu steigern, ohne daß dazu die Durchlaufgeschwindigkeit des Werkstückes reduziert werden muß.

Diese Aufgabe wird erfindungsgemäß gelöst wie in den Ansprüchen 1 und 12 angegeben.

Das Verfahren nach der vorliegenden Erfindung zum Bearbeiten von plattenförmigen Werkstücken aus Holz, Holzwerkstücken, Kunststoff oder dergleichen, bei dem die Werkstücke erfaßt, kontinuierlich entlang einer Bearbeitungsstrecke geführt, und dabei mit mindestens einem an der Bearbeitungsstrecke entlang geführten Mittel zur Bearbeitung in Eingriff gebracht werden, sieht vor, daß zur Relativpositionierung des mit dem jeweiligen Werkstück in Eingriff zu bringenden Mittels in einer ersten Phase über eine erste Steuereinrichtung das Mittel gegenüber dem jeweiligen Werkstück in eine vorgegebene Toleranzzone hinsichtlich Relativbewegung und -position geführt wird. Nach Erreichen der Toleranzzone wird der Bewegung des Mittels eine von einer zusätzlichen Steuereinrichtung gesteuerte Feinbewegung bis zu einer Feinpositionierung des Mittels überlagert. Nach der Feinpositionierung wird der Eingriff durchgeführt.

Eine erfindungsgemäße Vorrichtung zur Durchführung eines erfindungsgemäßen Verfahrens umfaßt eine Fördereinrichtung zum Erfassung und Führen eines Werkstückes entlang der Bearbeitungsstrecke, und mindestens ein im Bereich der Fördereinrichtung angeordnetes Bearbeitungsaggregat mit einem oder mehreren Mitteln zur Bearbeitung der Werkstücke. Eine erste Steuereinrichtung dient zur Führung des Mittels in die vorgegebene Toleranzzone, um die Werkstücke zu bearbeiten. Eine zusätzliche Steuereinrichtung ist zur Überlagerung einer Feinbewegung auf die von der ersten Steuereinrichtung gesteuerten Bewegung vorgesehen, um das Mittel fein zu positionieren.

Unter "Überlagern" wird eine Maßnahme verstanden, mit der auf eine Grundbewegung eine weitere Bewegung mit positiven oder negativen Vorzeichen aufaddiert wird, so daß sich eine resultierende Bewegung ergibt, die in gewissen Grenzen größer oder kleiner als die Grundbewegung sein kann. Diese Überlagerung kann erfindungsgemäß auf mechanische, pneumatische, elektrische oder elektronische Weise erfolgen.

Auf mechanische Weise kann eine derartige "Überlagerung" beispielsweise über zwei aufeinander angeordnete Schlittenanordnungen realisiert werden, von denen die eine (untere) Schlittenanordnung die Grundbewegung und die andere (obere) Schlittenanordnung die weitere Bewegung ausführt, so daß der bewegliche Teil der anderen (oberen) Schlittenanordnung die resultierende Bewegung ausführt.

Die mechanische Variante der "Überlagerung" kann jedoch auch über eine Getriebeanordnung erreicht werden, bei der einem ersten, die Grundbewegung ausführenden Getriebeglied über angeschlossene, weitere Getriebeglieder eine weitere Bewegung aufaddiert wird, so daß der Abtriebszweig des ersten Getriebegliedes in einer solchen Phase die resultierende Bewegung ausführt.

Im Falle einer elektrischen Variante der "Überlagerung" werden beispielsweise Steuersignale addiert bzw. subtrahiert und das Ergebnis der Überlagerung in eine Bewegung umgesetzt. Unter den Begriff der "Überlagerung" fällt aber auch die numerische Verknüpfung von Steuerdaten und die Umsetzung der verknüpften Steuerdaten in eine Bewegung, beispielsweise die Überlagerung oder Umschaltung von Regelkreisen zur Erzielung der Grundbewegung und der Feinbewegung.

Dadurch, daß erfindungsgemäß in der ersten Phase ein Gleichlauf zwischen Mittel und Werkstück angestrebt wird, und sobald dieser Gleichlauf innerhalb einer vorgegebenen Toleranzzone liegt, eine sensorische Feinkorrektur zur weitgehenden Beseitigung der innerhalb der Toleranzzone verbleibenden Toleranzen zwischen Werkstück und Mittel durchgeführt wird, kann die sich an die sensorische Feinkorrektur anschließende Aktionsphase, d.h. der Eingriff des Mittels mit dem Werkstück, mit erheblich verbesserter Präzision durchgeführt werden, selbst wenn die Durchlaufgeschwindigkeit des Werkstückes gesteigert wird. Die sensorische Feinkorrektur eliminiert auf wirksame Weise die präzisionsmindernden Einflüsse, wie etwa Schlupf zu Beginn und während des Werkstückvorschubs und Toleranzen im Vorschubtransportmechanismus und bei der Werkstückerfassung, so daß selbst dann, wenn höhere Vorschubgeschwindigkeiten zu einer Vergrößerung dieser Störeinflüsse führen, das Werkstück im Durchlauf mit hervorragender Präzision bearbeitet werden kann.

Vorteilhafte Ausführungsbeispiele ergeben sich aus den abhängigen Ansprüchen.

Im folgenden wird die vorliegende Erfindung anhand von bevorzugten Ausführungsbeispielen unter Bezugnahme auf die begleitenden Zeichnungen beschrieben.
- Figur 1: zeigt ein Geschwindigkeits-Wegdiagramm zur Erläuterung eines Werkstückbearbeitungsablaufes gemäß der vorliegenden Erfindung;
- Figur 2: zeigt eine schematische Darstellung eines Ausführungsbeispiels einer Durchlaufmaschine zur Bearbeitung von plattenförmigen Werkstücken gemäß der vorliegenden Erfindung;
- Figur 3: zeigt eine schematische Darstellung eines Bearbeitungsaggregates in Form einer Vorrichtung zur Anb ringung von Kantenmaterial bei einer Durchlaufmaschine gemäß der vorliegenden Erfindung;
- Figur 4: zeigt eine schematische Darstellung eines Bearbeitungsaggregates in Form eines Kappaggregates bei einer Durchlaufmaschine gemäß der vorliegenden Erfindung; und
- Figur 5: zeigt ein Ausführungsbeispiel einer Steuervorrichtung für eine Durchlaufmaschine gemäß der vorliegenden Erfindung.

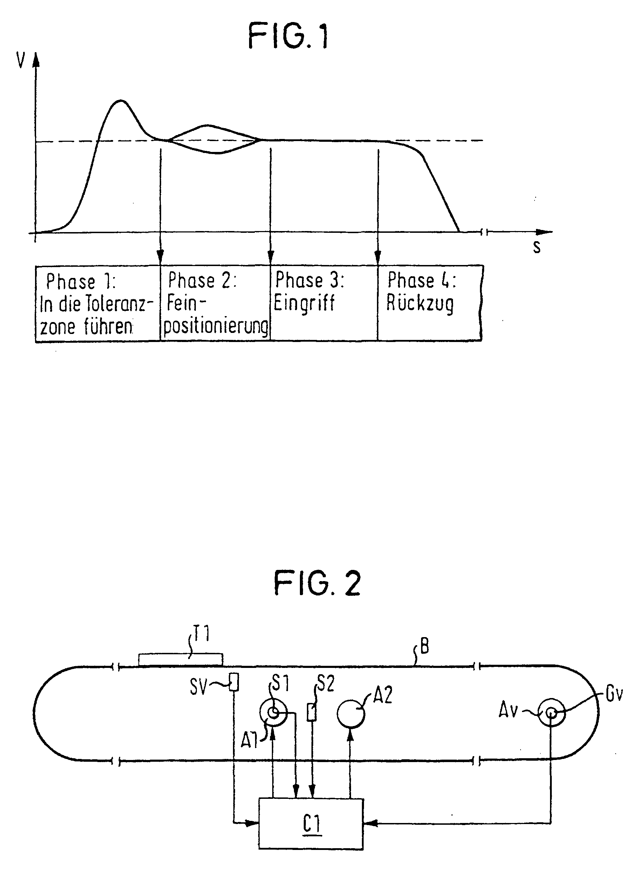

Figur 1 zeigt ein Geschwindigkeits-Wegdiagramm zur Erläuterung eines Durchlaufbearbeitungsvorganges gemäß der vorliegenden Erfindung. Auf der horizontal verlaufenden Achse dieses Diagramms ist der Weg s aufgetragen, über welchem die Geschwindigkeit V des mit dem Werkstück in Eingriff zu tretenden Mittels dargestellt ist. Die horizontal verlaufende, gestrichelte Linie deutet die Geschwindigkeit des Werkstückes an. In dem in Figur 1 dargestellten Ausführungsbeispiel ist die Geschwindigkeit des Werkstückes über dem zurückgelegten Weg eine Größe, an die die Geschwindigkeit des mit dem Werkstück in Eingriff zu tretenden Mittels derart angepaßt wird, daß eine präzise Bearbeitung des Werkstückes erreicht wird. Natürlich kann umgekehrt die Geschwindigkeit des Werkstückes an die Geschwindigkeit des Mittels angepaßt werden, ohne daß dieses eine wesentliche Abweichung von dem der Erfindung zugrundeliegenden Prinzip darstellen würde.

In dem in Figur 1 dargestellten Ausführungsbeispiel wird in einer ersten Phase eine Synchronisation der Bewegung des Mittels auf die Bewegung des Werkstückes angestrebt, um einen solchen Zustand herzustellen, daß sich das Mittel relativ zum Werkstück in einer vorgegebenen Toleranzzone befindet. Eine solche vorgegebene Toleranzzone kann etwa ein Geschwindigkeitsintervall der Geschwindigkeit des Mittels relativ zum Werkstück sein, oder ein Positionsintervall der Position des Mittels relativ zu einer vorgegebenen Bezugsposition des Werkstückes, oder bevorzugt beides. Die Führung des Mittels in die so vorgegebenen Toleranzzone kann auf herkömmliche Weise geschehen, etwa unter Verwendung der von dem Wegmeßsystem für den Werkstückvorschub bereitgestellten Signale und von Signalen, die ein Weggeber des Mittels bereitstellt.

Nach Erreichen der Toleranzzone wird in einer zweiten Phase eine Feinpositionierung des Mittels in Bezug auf das zu bearbeitende Werkstück durchgeführt. In dieser zweiten Phase wird das Mittel in der Toleranzzone geführt und außerdem sensorisch die Position des Mittels relativ zum Werkstück mit hoher Präzision erfaßt und mit einer Feinpositionsvorgabe des Mittels relativ zum Werkstück verglichen. Um die Feinpositionsvorgabe zu erfüllen, wird der Bewegung des Mittels eine Feinbewegung überlagert, bis das Mittel relativ zum durchlaufenden Werkstück die Feinpositionsvorgabe erfüllt. Dadurch, daß sich das Mittel relativ zum Werkstück bereits in der vorgegebenen Toleranzzone befindet, kann die Erfassung der Feinposition des Mittels relativ zum Werkstück mit hoher sensorischer Auflösung vorgenommen werden. Es genügt, daß die Feinpositionssensorik die vorgegebene Toleranzzone abdeckt, in welcher sich das Mittel relativ zum Werkstück befindet.

Erst nach der erfolgten Feinpositionierung findet in Phase 3 der Eingriff mit dem Werkstück statt. Durch die vorangehende Feinpositionierung in Phase 2 kann der Eingriff präzise an einer vorgegebenen Position am durchlaufenden Werkstück vorgenommen werden.

Je nach Art des Mittels und des vorzunehmenden Eingriffs am Werkstück kann sich die zweite Phase der sensorischen Feinkorrektur in die Phase 3 des Eingriffs hinein erstrecken. Auch während des Eingriffes kann der Vorgang der Feinpositionierung des Mittels relativ zum Werkstück fortgesetzt werden. Dieses ist beispielsweise dann der Fall, wenn die Positionsvorgabe des Mittels relativ zum Werkstück nicht ein vorgegebener Punkt ist, d.h. ein eindimensionale Positionsvorgabe, sondern etwa eine Bahnkurve, entlang welcher das Mittel mit dem Werkstück in Eingriff treten soll, beispielsweise zur Herstellung einer mehrdimensionalen Kontur am durchlaufenden Werkstück.

An die Phase des Eingriffs des Mittels mit dem Werkstück zur Bearbeitung desselben, schließt sich in dem in Figur 1 dargestellten Ausführungsbeispiel eine vierte Phase an, in welcher das Mittel einen Rückzug zurück zur Anfangsposition vollzieht, um die Bearbeitung des nächsten, durchlaufenden Werkstückes vorzubereiten. Diese Rückzugsphase kann auf herkömmliche Art und Weise durchgeführt werden und steht nicht in direktem Zusammenhang mit der vorliegenden Erfindung, so daß in Figur 1 diese Rückzugsphase 4 lediglich angedeutet ist. Wird das mit dem Werkstück in Eingriff zu tretende Mittel umlaufend geführt, so kann auf die in Figur 1 dargestellte Verzögerung des Mittels in der Phase 4 auf die Geschwindigkeit 0 zur Bewegungsumkehr verzichtet werden.

Der in Phase 2 dargestellte Überschwinger des Geschwindigkeitsprofils über dem Weg s und der in der Phase 2 dargestellte Unterschwinger des Geschwindigkeitsprofils über dem Weg s stellen exemplarische Geschwindigkeits-Wegverläufe dar, die sich für verschiedene Relativpositionen und Relativgeschwindigkeiten zwischen Werkstück und Mittel am Ende der Phase 1 ergeben. So ergibt sich gemäß dem in Phase 2 dargestellten Überschwinger eine Überhöhung der Geschwindigkeit des Mittels im Vergleich zur Geschwindigkeit des Werkstückes, wenn am Ende der Phase 1 das Mittel relativ zum Werkstück zwar in der Toleranzzone ist, jedoch hinter der Feinpositionsvorgabe in bezug auf das Werkstück hinterhereilt. Entsprechend ergibt sich der in Phase 2 dargestellte Unterschwinger, wenn am Ende der Phase 1 sich das Mittel relativ zum Werkstück in der vorgegebenen Toleranzzone befindet, jedoch der Feinpositionsvorgabe relativ zum Werkstück vorwegeilt.

Figur 2 zeigt ein Ausführungsbeispiel einer Durchlaufmaschine gemäß der vorliegenden Erfindung. In dieser Figur bezeichnet das Bezugszeichen B eine Fördereinrichtung, hier beispielsweise ein Transportband oder eine Transportkette, zum Transportieren eines Werkstückes T1 entlang einer Durchlaufbearbeitungsstrecke. Av bezeichnet ein Antriebsaggregat der Fördereinrichtung B. Gv bezeichnet einen Weggeber, der Wegmeßsignale entsprechend dem von der Fördereinrichtung B zurückgelegten Weg ausgibt. SV zeichnet einen entlang der Transportstrecke des Werkstücks T1 angeordneten Sensor zur Erfassung des Werkstückes T1. A1 bezeichnet eine Antriebseinheit für ein Bearbeitungsaggregat zur Durchlaufbearbeitung des auf der Fördereinrichtung B durchlaufenden Werkstückes T1. Die Antriebseinheit A1 dient dazu, dem Bearbeitungsaggregat eine dem durchlaufenden Werkstück T1 entsprechende, translatorische Bewegung zu verleihen. S1 bezeichnet einen Wegmeßsensor zur Ausgabe von Signalen entsprechend dem von dem Bearbeitungsaggregat zurückgelegten Weg.

A2 bezeichnet eine Antriebseinheit für ein mit dem Werkstück T1 in Eingriff zu gelangendes Mittel, etwa ein Werkzeug. Diese Antriebseinheit ist Bestandteil des Bearbeitungsaggregates. S2 bezeichnet einen Feinpositionssensor, der an dem Bearbeitungsaggregat derart angeordnet und ausgebildet ist, daß er eine Feinposition des Bearbeitungsaggregates, bevorzugt des Mittels, erfassen kann.

C1 bezeichnet eine Steuereinheit für das Bearbeitungsaggregat, die von den Sensoren Sv, S1, S2 und Gv ausgegebene Signale empfängt und die Antriebseinheit A1 für das Bearbeitungsaggregat und die Antriebseinheit A2 für das Mittel, etwa das Werkzeug, des Bearbeitungsaggregates entsprechend den empfangenen Signalen steuert.

In der Figur 2 ist das Transportband B der Durchlaufmaschine links und rechts des Bearbeitungsaggregates oberseitig und unterseitig durchbrochen dargestellt, um anzudeuten, daß die Durchlaufbearbeitungsmaschine der Figur 2 eine Vielzahl von in Durchlaufrichtung des Werkstückes T1 hintereinander angeordneten Bearbeitungsaggregaten aufweisen kann, jeweils mit einer dem jeweiligen Aggregat zugeordneten Steuereinrichtung, um an dem durchlaufenden Werkstück T1 verschiedene Bearbeitungsschritte hintereinander durchzuführen. Jedes dieser Bearbeitungsaggregate kann einen eigenen Sensor Sv zur Erfassung des Werkstückes T1 , einen eigenen Sensor S1 zur Erfassung der Position des Bearbeitungsaggregates und einen eigenen Sensor S2 zur Erfassung der Feinposition des Bearbeitungsaggregates relativ zum Werkstück T1, sowie eigene Antriebseinheiten A1 und A2 umfassen. Die Steuereinrichtungen der jeweiligen Bearbeitungsaggregate empfangen die von dem Wegmeßsensor Gv für das Transportband B ausgegebenen Wegmeßsignale. Die folgende Beschreibung der Arbeitsweise des in Figur 2 dargestellten Bearbeitungsaggregates gilt demgemäß entsprechend auch für weitere, entlang der Durchlaufrichtung des Werkstücks T1 angeordnete, in Figur 2 nicht gezeigte Bearbeitungsaggregate.

Im Betrieb der in Figur 2 schematisch dargestellten Durchlaufmaschine erhält die Steuerung C1 für das Bearbeitungsaggregat von dem Wegmeßsensor Gv Wegmeßsignale bezüglich des Transportbandes B, die auch eine Ermittlung der Transportgeschwindigkeit des Werkstückes T1 durch die Steuerungseinrichtung C1 zulassen. Sowohl der ermittelte Weg als auch die ermittelte Geschwindigkeit des Werkstückes T1 sind jedoch mit den eingangs genannten Störgrößen beaufschlagt, etwa Schlupf zwischen dem Transportband B und dem Werkstück T1 und/oder Verformungen des Transportbandes B aufgrund der von der Antriebseinheit Av über das Band auf das Werkstück T1 übertragenen Vorschubkraft.

Zur Bearbeitung des Werkstückes T1 bereitet die Steuerung C1 mittels des Antriebsaggregats A1 eine Mitlaufbewegung des Bearbeitungsaggregates vor, wobei der Sensor S1 der Steuerung C1 mitteilt, an welcher Position sich das Bearbeitungsaggregat momentan befindet. Aus den von dem Sensor Gv bereitgestellten Wegmeßsignalen des Transportbandes B und den von dem Sensor S1 bereitgestellten Wegmeßsignalen des Bearbeitungsaggregates kann die Steuerung C1 nun in einer ersten Phase des Bearbeitungsvorganges das Bearbeitungsaggregat relativ zu dem zu bearbeitenden Werkstück T1 in eine vorgegebene Toleranzzone führen.

Bevorzugt geschieht dieses dadurch, daß das Bearbeitungsaggregat mittels der Antriebseinheit A1 mit einem Wegvorhalt relativ zur Position des Werkstücks T1 derart gestartet wird, daß die Beschleunigung des Bearbeitungsaggregates bereits dann beginnt, wenn das Werkstück T1 sich noch um den Wegvorhalt entfernt von dem Bearbeitungsaggregat befindet. Unter Ausnutzung eines solchen Wegvorhaltes lassen sich Beschleunigungs- und Verzögerungsmaxima des Bearbeitungsaggregates reduzieren.

Die Steuereinrichtung C1 erfaßt während dieser ersten Phase, ob das Werkstück T1 in der vorgegebenen Toleranzzone geführt wird oder nicht. Hat das Bearbeitungsaggregat gemäß dem von dem Sensor S1 ausgegebenen Positionssignal die Position des Werkstückes T1 gemäß dem von dem Wegmeßsensor Gv ausgegebenen Positionssignal innerhalb einer vorgegebenen Toleranzbreite erreicht, und stimmen die aus diesen Signalen von der Steuereinrichtung C1 ermittelten Geschwindigkeiten des Werkstückes T1 und des Bearbeitungsaggregates innerhalb von vorgegebenen Geschwindigkeitstoleranzgrenzen überein, so ist das mit der ersten Phase verfolgte Ziel, das Werkstück T1 in Bezug auf das Bearbeitungsaggregat in die vorgegebene Toleranzzone zu führen, erreicht.

In diesem Ausführungsbeispiel übernimmt der Sensor Sv die Funktion, die von dem Wegmeßsensor Gv des Transportbandes B ausgegebene Information über den von dem Werkstück T1 zurückgelegten Weg durch Erfassen der absoluten Position des Werkstückes T1 zu korrigieren. Der Sensor Sv ist in diesem Ausführungsbeispiel stationär an der Maschine im Bearbeitungsbereich des zugehörigen Bearbeitungsaggregates angeordnet, und teilt der Steuereinrichtung C1 mit, wann das Werkstück T1 sich an der bekannten Position des Sensors Sv befindet. Die Steuereinrichtung C1 korrigiert die von dem Wegmeßsensor Gv ausgegebene Information auf der Grundlage der von dem Sensor Sv ausgegebenen Positionsinformation des Werkstückes T1, so daß die Steuereinrichtung C1 im Bereich des von ihr gesteuerten Bearbeitungsaggregates die Position des Werkstückes T1 mit erhöhter Präzision erfassen kann. Bevorzugt ist der Sensor Sv an einer Stelle angeordnet, die es erlaubt, daß die Steuereinrichtung C1 das Werkstück T1 schon unter Berücksichtigung der von dem Sensor Sv gelieferten Information in die vorgegebene Toleranzzone führt. Dadurch ermöglicht der Sensor Sv die Verkleinerung des Geschwindigkeits- und Positionstoleranzbereiches der vorgegebenen Toleranzzone, was für die sich anschließende zweite Phase des Bearbeitungsvorganges vorteilhaft ist.

In der zweiten Phase des Bearbeitungsvorganges erfaßt die Steuereinrichtung C1 über den Sensor S2 die Position des Bearbeitungsaggregates, bevorzugt des Mittels, relativ zu einer Position am Werkstück T1, an welcher der Eingriff stattfinden soll. Da sich das Werkstück T1 bereits in der Toleranzzone befindet, befindet sich das Mittel nahe an der Positionsvorgabe am Werkstück T1, an der der Eingriff stattfinden soll. Der Sensor S2 dient dazu, die verbleibenden Abweichungen zu dieser Positionsvorgabe mit hoher Auflösung zu erfassen, um es der Steuereinrichtung C1 zu ermöglichen, der Bewegung des Bearbeitungsaggregates eine Feinbewegung so zu überlagern, daß diese Abweichung von der Positionsvorgabe sehr klein wird oder verschwindet.

Dazu ist der Sensor S2 bevorzugt als ein Relativpositionssensor ausgebildet, der sich gemeinsam mit dem Bearbeitungsaggregat bewegt und auf diesem montiert ist.

Die Steuereinrichtung C1 steuert das Antriebsaggregat A1 abhängig von den Ausgangssignalen des Sensors S2 so, daß der Bewegung des Bearbeitungsaggregates zur Führung desselben in der Toleranzzone gemäß den von den Sensoren Gv und S1 ausgegebenen Signalen, eine Feinbewegung gemäß dem von S2 ausgegebenen Signal überlagert wird, um die in der Toleranzzone verbleibenden Abweichungen des Mittels von der Positionsvorgabe zu verringern und möglichst verschwinden zu lassen. Bevorzugt geschieht diese Überlagerung innerhalb der Steuereinrichtung C1 und durch Bereitstellen eines geeignete Antriebssignals an die Antriebseinrichtung A1 des Bearbeitungsaggregates. Alternativ kann das Mittel relativ zum Bearbeitungsaggregat beweglich ausgestaltet sein, wobei dann die Steuereinrichtung C1 eine Relativbewegung zwischen Mittel und Bearbeitungsaggregat steuert, so daß das Mittel die Positionsvorgabe am Werkstück T1 gemäß den Signalen des hochauflösenden Feinpositionssensors S2 erfüllt.

Hat das Mittel die Feinpositionsvorgabe am Werkstück T1 erreicht, so ist die zweite Phase der Feinpositionierung des Mittels abgeschlossen und der Eingriff des Mittels mit dem Werkstück kann nun erfolgen. Während des Eingriffes wird das Bearbeitungsaggregat bezüglich des Werkstückes fortwährend in der Toleranzzone gehalten, und der Feinpositionssensor S2 ermöglicht es der Steuereinrichtung C1 während des Eingriffes, das Mittel relativ zum Werkstück auf der Feinpositionsvorgabe zu halten.

Nach erfolgtem Eingriff führt das Bearbeitungsaggregat eine geeignete Rückzugsbewegung durch, entweder durch Abbremsen oder durch eine umlaufende Bewegung, um die Bearbeitung des nächsten Werkstückes auf dem Transportband B vorzubereiten.

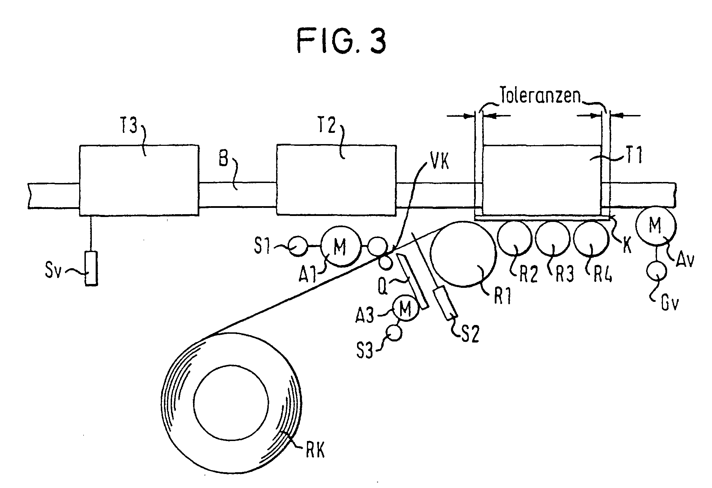

Figur 3 zeigt ein zweites Ausführungsbeispiel einer Durchlaufmaschine gemäß der vorliegenden Erfindung, in Form eines Bearbeitungsaggregates, das zur Aufbringung von Kantenmaterial an ein durchlaufendes Werkstück dient.

In dieser Figur bezeichnen T1, T2 und T3 Werkstücke, die hintereinander auf dem Transportband B an einem Bearbeitungsaggregat zur Aufbringung von Kantenmaterial vorbeigeführt werden. In diesem Ausführungsbeispiel ist das Bearbeitungsaggregat stationär, und lediglich das mit dem zu bearbeitenden Werkstück in Eingriff tretende Mittel, nämlich das Kantenmaterial, bewegt sich mit dem Werkstück. Das Bearbeitungsaggregat gemäß dem in Figur 3 gezeigten Ausführungsbeispiel umfaßt ein Antriebsaggregat A1 mit einem Wegmeßsensor S1 für den Vorschub von auf einer Rolle RK aufgerolltem Kantenmaterial, beispielsweise Kunststoffkantenstreifen. Das Bearbeitungsaggregat umfaßt ferner einen Feinpositionssensor S2 , der stationär angeordnet ist und angibt, wann die Vorderkante des aufzubringenden Kantenmaterials den Sensor S2 passiert. Ferner umfaßt das Bearbeitungsaggregat eine Hauptandruckrolle R1 und Andruckrollen R2, R3, R4. Zum Abschneiden des von der Rolle RK abgewickelten Kantenmaterials dient ein von einem Antriebsaggregat A3 betätigtes Messer Q. K bezeichnet einen auf eine Seitenkante des Werkstückes T1 im Durchlauf aufgebrachten Kantenmaterialabschnitt. Av bezeichnet ein Antriebsaggregat für das Transportband B. Gv bezeichnet einen Wegmeßsensor zum Messen des Vorschubs des Transportbandes B. Sv bezeichnet einen stationären Sensor zur Erfassung der Position der durchlaufenden Werkstücke. Der Begriff "stationär" bedeutet, daß der Sensor relativ zu einem Maschinenchassis unbeweglich angeordnet ist.

Das Bearbeitungsaggregat zur Aufbringung von Kantenmaterial umfaßt außerdem eine in Figur 3 nicht gezeigte Steuereinrichtung, die Signale des Wegmeßsensors Gv, des Materialtransportwegsensors S1 und der Sensoren Sv und S2 empfängt und das Antriebsaggregat A1 für den Kantenmaterialtransport und das Antriebsaggregat A3 für das Messer Q steuert.

Im Betrieb erfaßt der Sensor Sv die Position eines von dem Bearbeitungsaggregat der Figur 3 mit einer Kante zu versehenden Werkstückes. Entsprechend der Funktion des Sensors Sv in Figur 2 ermöglicht dieser Sensor der Steuereinrichtung, die Wegmeßsignale des Sensors Gv für den Vorschub des Transportbandes B zu korrigieren und auf diese Weise eine verbesserte Präzision der Positions- und Geschwindigkeitserfassung des zu bearbeitenden Werkstückes im Bereich des Bearbeitungsaggregates zu erzielen.

In der ersten Phase der Bearbeitung führt die Steuereinrichtung das von der Rolle RK abgerollte Kantenmaterial mittels des Antriebsaggregates A1 in eine vorbestimmte Toleranzzone bezüglich der Geschwindigkeit des Kantenmaterialvorschubs und/oder der Position der Vorderkante VK des Kantenmaterials. Dazu verarbeitet die Steuereinrichtung die von dem Wegmeßsystem S1 des Kantenmaterialstransportaggregates A1 bereitgestellten Wegmeßsignale, aus denen die Steuereinrichtung die Geschwindigkeit des Kantenmaterialvorschubs bestimmen und diese auf die Geschwindigkeit des Werkstückvorschubs abgleichen kann, die sich aus den Wegmeßsignalen des Sensors Gv ergibt. Die Steuereinrichtung regelt den Kantenmaterialtransport des Kantenmaterials derart, daß die Transportgeschwindigkeit des Kantenmaterials der Vorschubgeschwindigkeit des zu bearbeitenden Werkstückes innerhalb vorgegebener Toleranzgrenzen entspricht. Bevorzugt wird der Kantenmaterialtransport über das Aggregat A1 so geregelt, daß die Position der Vorderkante des Kantenmaterials auf der Abwicklung des Transportweges des Kantenmaterials auf den Transportweg des Werkstückes innerhalb vorgegebener Toleranzgrenzen der Position der Vorderkante des zu bearbeitenden Werkstückes entspricht. Diese Vorgabe kann die Steuereinrichtung aus der Kenntnis der Länge des Kantenmaterialtransportweges, der Position des Messers Q und des von dem Kantenmaterialtransportaggregat A1 geleisteten Kantenmaterialvorschubs gemäß den von dem dazugehörigen Wegmeßsensor S1 ausgegebenen Wegmeßsignalen erfüllen. Sobald die Vorderkante des aufzubringenden Kantenmaterials diese Positionsvorgabe innerhalb der vorgegebenen Toleranzgrenzen erfüllt, ist die erste Bearbeitungsphase abgeschlossen und das Kantenmaterial wird in der vorgegebenen Toleranzzone geführt.

Die in der Toleranzzone geführte Vorderkante VK des Kantenmaterials passiert dann den Feinpositionssensor S2. Der Feinpositionssensor S2 ist in diesem Ausführungsbeispiel ein stationär angeordneter Sensor, der der Steuereinrichtung mitteilt, zu welcher Zeit die Vorderkante VK die Erfassungsposition des Sensors S2 erreicht. Aus dieser von dem Sensor S2 bereitgestellten Information ist die Steuereinrichtung nun in der Lage, zu errechnen, um wieviel die Position der Vorderkante VK auf der Abwicklung des Transportweges des Kantenmaterials von der Position der Vorderkante des zu bearbeitenden Werkstückes abweicht. Entsprechend der so festgestellten Feinpositionsabweichung der Vorderkante VK des Kantenmaterials von der Vorderkante des Werkstückes wird dann von der Steuereinrichtung das Antriebsaggregat A1 für den Kantenmaterialtransport so gesteuert, daß diese Feinpositionsabweichung verringert wird und möglichst verschwindet. Dazu wird der Vorschubbewegung des Kantenmaterials eine Vorschub-Feinbewegung von der Steuereinrichtung überlagert, um diese Feinpositionsabweichung auszugleichen.

Nach dieser Feinpositionierung befindet sich Vorderkante VK des Kantenmaterials dann an einer Position, die auf der Abwicklung des Kantenmaterialtransportweges auf den Weg der Vorderkante des Werkstückes mit guter Präzision der Vorderkantenposition des Werkstückes entspricht, so daß an der Stelle, wo der Kantenmaterialtransportweg auf den Transportweg des Werkstückes trifft, die Vorderkante VK des Kantenmaterials präzise auf die Vorderkante des durchlaufenden Werkstückes trifft.

Nachdem die von dem Antriebsaggregat A1 vorgeschobene Länge von Kantenmaterial der Seitenlänge des zu bearbeitenden Werkstückes entspricht, wird über das Antriebsaggregat A3 das Messer Q betätigt, um die passende Länge von Kantenmaterial abzuschneiden, womit der Vorgang des Aufbringens von Kantenmaterial im Durchlauf endet.

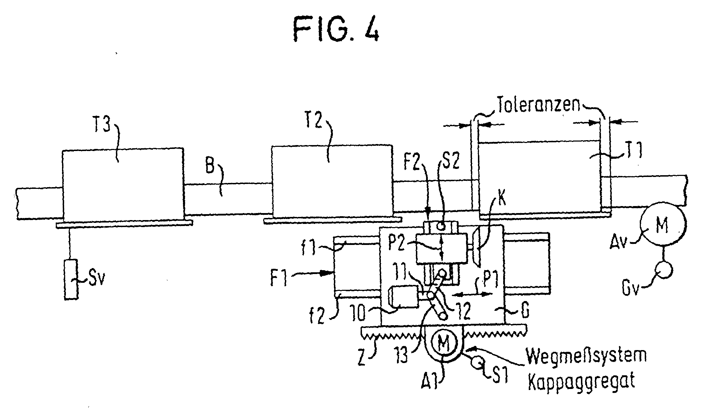

Fig. 4 zeigt ein drittes Ausführungsbeispiel einer Durchlaufmaschine gemäß der vorliegenden Erfindung, in Form eines Bearbeitungsaggregates, das zum sogenannten "Kappen" von in einem vorangegangenen Arbeitsgang auf das jeweilige Werkstück aufgebrachtem Kantenmaterial dient und deshalb allgemein als Kappaggregat bezeichnet wird. Mit einem derartigen Kappaggregat wird (in Durchlaufrichtung betrachtet) der über die Werkstückvorderkante und/oder die Werkstückhinterkante überstehende Kantenabschnitt präzise bündig zur Werkstückvorderkante bzw. zur Werkstückhinterkante abgetrennt.

Das Aufbringen des Kantenmaterials im vorangegangenen Arbeitsgang kann über herkömmliche Kantenanleimaggregate, bevorzugt jedoch über das Bearbeitungsaggregat gemäß Fig. 3 erfolgen, bei dessen Einsatz der überstehende Kantenteil aufgrund der präzisen Arbeitsweise dieses Aggregates äußerst klein gehalten werden kann.

In Fig. 4 bezeichnen T1, T2 und T3 Werkstücke, die hintereinander auf dem Transportband B an dem Kappaggregat vorbeigeführt werden.

Das Kappaggregat umfaßt eine sogenannte Geradführung F1, die neben dem Transportband und parallel zu diesem verläuft. Die Geradführung F1 umfaßt zwei im Abstand und parallel zueinander verlaufende Führungsstangen f1 und f2, an denen eine Grundplatte G in Richtung eines Pfeiles P1, also parallel zum Transportband, hin- und herverschiebbar gelagert ist.

An der Grundplatte G ist eine Zahnstange Z befestigt, die mit dem Ritzel (nicht dargestellt) eines ortsfest angeordneten Antriebsmotors M verbunden ist, der mit einem Wegmeßsystem des Kappaggregates zusammenarbeitet.

Auf der Grundplatte G ist senkrecht zur Geradführung F eine weitere Geradführung F2 angeordnet, auf der ein von einem Motor angetriebenes Kappsägeblatt K in Richtung des Pfeiles P2 hin- und herverschiebbar ist.

Auf der dem Transportband B abgewandten Seite des Kappsägeblattes K ist auf der Grundplatte G ein Arbeitszylinder 10 angeordnet, dessen Kolbenstange 11 über ein Gelenk mit Kniehebeln 12 und 13 verbunden ist. Das freie Ende des Kniehebels 13 ist über ein Gelenk auf der Grundplatte G befestigt, während das freie Ende des Kniehebels 12 ebenfalls über ein Gelenk an dem Motor des Kappsägeblattes K befestigt ist.

Wird nun die Kolbenstange 11 des Arbeitszylinders 10 von der in Fig. 4 dargestellten zurückgezogenen Stellung ausgefahren, so wird aufgrund der Kniehebelanordnung das Kappsägeblatt K zur Durchführung des Kappschnittes in Richtung des Transportbandes B bewegt, bis sich die Kniehebelanordnung in ihrer gestreckten Stellung befindet, in der die Kniehebel 12 und 13 miteinander fluchten. Beim weiteren Ausfahren der Kolbenstange 11 wird dann das Kappsägeblatt in bezug auf das Transportband B wieder zurückgezogen, bis sich die Kolbenstange in ihrer vollständig ausgefahrenen Stellung befindet.

Aufgrund dieser Arbeitsweise wird mit nur einer einzigen Ausfahrbewegung der Kolbenstange 11, also mit nur einem einzigen Hub, das Kappsägeblatt K zur Durchführung des Kappschnittes in Richtung des Transportbandes B ausgefahren und wieder in seine Ausgangsstellung zurückgezogen. Mit einem einzigen Hub der Kolbenstange führt das Kappsägeblatt K somit eine Eintauchbewegung einschließlich Rückzugsbewegung aus, die aufgrund der Kniehebelanordnung mit sehr hoher Geschwindigkeit und präzise definiert ausgeführt werden kann.

Wie in den vorangehenden Figuren 2 und 3 bezeichnet auch in Figur 4 das Bezugszeichen Av ein Antriebsaggregat für das Transportband B für den Vorschub der zu bearbeitenden Werkstücke. Gv bezeichnet einen Wegmeßsensor zur Ausgabe von Signalen entsprechend den von dem Transportband B zurückgelegten Weg. Sv bezeichnet einen im Bereich des Kappaggregates stationär angeordneten Sensor zur Anzeige der Position des von dem Kappaggregat zu bearbeitenden Werkstückes. Der Sensor Sv gibt ein Signal aus, das anzeigt, wann das Werkstück die durch den Sensor Sv vorgegebene Position erreicht. S2 bezeichnet einen Feinpositionssensor, der ausgebildet ist, die Relativposition zwischen dem Kappsägeblatt K und der quer zur Werkstücktransportrichtung verlaufenden Werkstückkante zu zeigen, mit welcher bündig das Kantenmaterial abgeschnitten werden soll. Der Sensor S2 ist bevorzugt fest mit der Geradführung F2 oder mit der Grundplatte G verbunden. A1 bezeichnet das Antriebsaggregat für den Vorschub des Kappaggregates entlang der Durchlaufrichtung des Werkstückes. S1 bezeichnet einen Wegmeßsensor für den von dem Kappaggregat zurückgelegten Weg.

Die von den Sensoren Gv, Sv, S1 und S2 ausgegebenen Signale werden von einer in Figur 4 nicht gezeigten Steuereinrichtung empfangen, die das Antriebsaggregat Av für den Werkstückvorschub, das Antriebsaggregat A1 für den Vorschub des Kappaggregates entlang der Transportrichtung des Werkstückes, und den Arbeitszylinder 10 des Kappaggregates steuert.

Im Betrieb erfaßt der Sensor Sv die Position eines von dem Kappaggregat der Figur 4 zu bearbeitenden Werkstückes. Entsprechend der Funktion dieses Sensors in den Ausführungsbeispielen der Figuren 2 und 3 ermöglicht dieser Sensor der Steuereinrichtung, die Wegmeßsignale des Sensors Gv für den Vorschub des Transportbandes B zur Erzielung einer verbesserten Präzision der Erfassung der tatsächlichen Position des Werkstückes zu korrigieren.

In der ersten Phase der Bearbeitung führt die Steuereinrichtung das Kappaggregat in bezug auf das durchlaufende, zu bearbeitende Werkstück in eine vorgegebene Toleranzzone. In dieser Phase sorgt die Steuereinrichtung mittels des Antriebsaggregates A1 für den Vorschub des Kappaggregates dafür, daß die Position des Kappaggregates innerhalb vorgegebener Toleranzgrenzen der Position des Werkstückes T1 entspricht. Bei der Führung des Kappaggregates in diese Toleranzzone relativ zum durchlaufenden Werkstück T1 kann die Steuereinrichtung die Signale der Sensoren Gv, Sv und S1 verwenden.

Aus den von diesen Sensoren abgegebenen Signalen kann die Steuereinrichtung feststellen, ob das Kappaggregat die vorgegebene Toleranzzone erreicht hat. Sobald dieses der Fall ist, erfaßt die Steuereinrichtung in der anschließenden zweiten Bearbeitungsphase mittels des Sensors S2 die Feinposition des mitlaufenden Kappaggregates relativ zu der Kante des Werkstückes T1, mit welcher das Kantenmaterial nach der Kappung bündig abschließen soll. Weil sich das Kappaggregat bezüglich des zu bearbeitenden Werkstückes T1 bereits in der Toleranzzone befindet, kann der Sensor S2 bevorzugt ausgebildet sein, die Abweichungen des Kappaggregates von der Idealposition bezüglich des Werkstückes T1 innerhalb der Toleranzzone mit erhöhter Auflösung zu erfassen.

In der zweiten Bearbeitungsphase erfaßt die Steuereinrichtung die von dem Feinpositionssensor S2 ausgegebenen Relativpositionssignale und überlagert der mitlaufenden Bewegung des Kappaggregates eine Feinbewegung derart, daß das Kappsägeblatt K relativ zum Werkstück T1 feinpositioniert wird. Sobald der Sensor S2 anzeigt, daß das Kappaggregat die Feinposition relativ zum Werkstück T1 erreicht hat, betätigt die Steuereinrichtung den Zylinder 10, um den Überstand des Kantenmaterials bündig mit der entsprechenden Werkstückkante zu kappen.

Im Anschluß an diese Eingriffsphase schließt sich entweder eine Rückzugsphase zur Bearbeitung des nächsten durchlaufenden Werkstückes T2 an oder das Kappaggregat wird unter Ausnutzung der Tatsache, daß die Grundbewegung des Kappaggregates bereits der Vorschubbewegung des Werkstückes entspricht, zur gegenüberliegenden Werkstückkante vorgefahren, so daß sich beispielsweise an die Eingriffsphase zur Bearbeitung der Werkstückhinterkante unmittelbar eine weitere erste Phase zur Führung des Kappaggregates in die Toleranzzone zur Bearbeitung der Vorderkante desselben Werkstückes T1 anschließt. In diesem Fall findet die Rückzugsphase erst nach der Feinpositionierungsphase und der Eingriffsphase in bezug auf die Vorderkante des Werkstückes T1 statt.

Der Sensor S2 ist bevorzugt als optischer Sensor ausgebildet, der in starrer Verbindung mit dem Kappaggregat, etwa mit der Geradführung F2 unmittelbar oberhalb oder unterhalb der jeweiligen Hauptoberfläche des zu bearbeitenden Werkstückes T1 führbar angeordent ist, so daß er die Werkstückkante unabhängig davon erfassen kann, ob sich das Werkstück in Vorschubrichtung vor oder hinter dem Sensor S2 befindet.

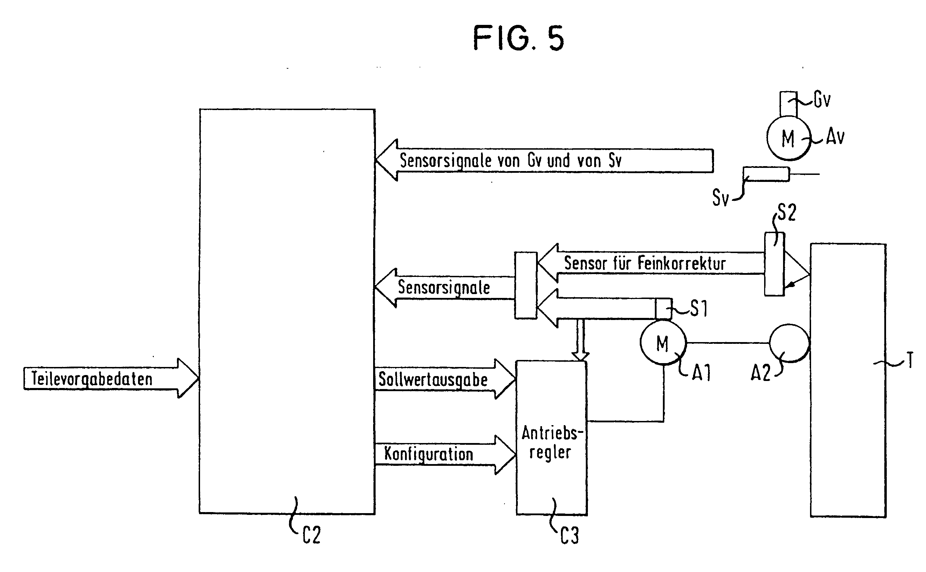

Figur 5 zeigt ein Ausführungsbeispiel einer Steuervorrichtung für eine Durchlaufbearbeitungsmaschine gemäß der vorliegenden Erfindung.

Komponenten der Figur 5, die Komponenten in den vorangehenden Figuren entsprechen, sind in den Figuren mit denselben Bezugszeichen versehen. Zur Vermeidung von Wiederholungen wird bezüglich der Anordnung und Funktion dieser Komponenten auf die Beschreibungen zu den vorangehenden Ausführungsbeispielen verwiesen.

In Figur 5 bezeichnet C3 einen Antriebsregler für das Antriebsaggregat A1 des Bearbeitungsaggregates. Der Regler C3 empfängt von dem Positionssensor S1 des Bearbeitungsaggregates der Position des Bearbeitungsaggregates entsprechende Sensorsignale, die die Ist-Position des Mittels anzeigen. Der Regler C3 empfängt außerdem Positionsvorgaben, d.h. Positionssollwerte und regelt über das Antriebsaggregat A1 die Position des Mittels derart, daß die von dem Sensor S1 angezeigte Position des Mittels möglichst gut die Positionsvorgabe erfüllt.

C2 bezeichnet eine Recheneinheit, die dazu dient, die Positionssollwerte für den Regler C3 zu berechnen. Außerdem übernimmt die Recheneinheit C2 die Funktion, zu erfassen, ob das Mittel in der vorgegebenen Toleranzzone geführt wird oder nicht.

Zur Erfüllung dieser Funktionen empfängt die Recheneinheit C2 die Sensorsignale des Wegmeßsensors Gv des von dem Antriebsaggregat Av angetriebenen Werkstückfördermittels, und außerdem die Sensorsignale des Sensors Sv zur Werkstückerfassung. Außerdem empfängt die Recheneinheit C2 Teilevorgabedaten, die beispielsweise anzeigen, an welcher Stelle des Werkstückes relativ zu der von dem Sensor Sv und/oder dem Sensor Gv erfaßbaren Werkstückposition der Eingriff des Mittels stattfinden soll. Beispielsweise geben diese Teilevorgabedaten an, in welcher Entfernung von der vom Sensor Sv erfaßbaren Werkstückvorderkante eine Bohrung gesetzt, ein Beschlag montiert oder eine Nut gefräßt werden soll.

Aus den Signalen der Sensoren Gv und Sv, die die Position des Werkstückes anzeigen, und aus den Teilvorgabedaten ist die Recheneinheit C2 nun in der Lage, für den Antriebsregler des Mittels eine Sollwertvorgabe zu berechnen, die die Bewegung des Mittels in die Toleranzzone, entsprechend der Bewegung des Werkstückes, beschreibt. Aus dem von dem Positionssensor S1 des Mittels an die Recheneinheit C2 gegebenen Positionssignal kann die Recheneinheit C2 außerdem bestimmen, ob das Mittel bereits in der vorgegebenen Toleranzzone geführt wird oder nicht. Dieses läßt sich beispielsweise aus dem Vergleich zwischen der von der Recheneinheit C2 errechneten Sollwertausgabe an den Regler C3 und der vom Positionssensor S1 angezeigten Ist-Position des Mittels bestimmen.

Sobald die Recheneinheit C2 feststellt, daß das Mittel in der vorgegebenen Toleranzzone geführt wird, führt die Recheneinheit C2 gemäß dem in Figur 5 gezeigten Ausführungsbeispiel eine Umkonfigurierung des Antriebsreglers C3 durch, um der Bewegung des Mittels in der vorgegebenen Toleranzzone eine Feinbewegung zu überlagern, die zu einer präzisen Ausrichtung der Position des Mittels auf die Position am Werkstück, wo der Eingriff stattfinden soll, führt. Für diese Feinpositionierung des Mittels relativ zum durchlaufenden Werkstück empfängt die Recheneinheit C2 das Sensorsignal von dem Feinpositionssensor S2, der in diesem Ausführungsbeispiel eine Relativposition zwischen Werkstück und Mittel anzeigt, aus der sich die Abweichung des Mittels von der Eingriffsposition ergibt. Aus diesem Sensorsignal des Sensors S2 kann die Recheneinheit C2 nun die Sollwertausgabe an den Antriebsregler C3 entsprechend korrigieren, so daß der Antriebsregler C3 die Feinpositionierung des Mittels gemäß dem so korrigierten Positionssollwert an den Regler C3 vornehmen kann. In diesem Ausführungsbeispiel wird das von dem Feinpositionssensor S2 ausgegebene Feinpositionssignal des Mittels relativ zum Werkstück dazu verwendet, dem Sollwert, den die Recheneinheit C2 aus den Signalen der Sensoren Sv und Gv für die Werkstückerfassung errechnet, eine Korrekturgröße gemäß dem von dem Feinpositionssensor S2 ausgegebenen Signal zu überlagern, so daß die von der Recheneinrichtung C2 an den Regler C3 gegebene, korrigierte Sollwertausgabe eine Bewegung des Mittels innerhalb der Toleranzzone beschreibt, der eine Feinbewegung zur präzisen Positionierung des Mittels relativ zum Werkstück überlagert ist. Diese Sollwertvorgabe von überlagerten Bewegungen wird von dem Antriebsregler C3 unter Zuhilfenahme des Antriebsaggregates A1 und des Sensors S1 in eine entsprechende tatsächliche Bewegung des Mittels umgesetzt.

Durch die Umkonfiguration des Antriebsreglers C3 wird die Regelverstärkung des Antriebsreglers C3 erhöht, sobald das Mittel in bezug auf das durchlaufende Werkstück innerhalb der vorgegebenen Toleranzzone geführt wird. Durch die Erhöhung der Regelverstärkung kann die Feinpositionierung des Mittels gemäß der korrigierten Sollwertausgabe von der Recheneinrichtung C2 an den Regler C3 schneller und präziser durchgeführt werden, ohne daß die erhöhte Regelgeschwindigkeit und -präzision in der zweiten Phase der Bearbeitung zu nachteiligem, erhöhtem Überschwingen des Reglers in der ersten Phase der Bearbeitung führt, in welcher die Soll- Istwertabweichungen wesentlich größer sein können als in der zweiten, der Feinpositionierung dienenden Bearbeitungsphase.

## Patentansprüche

1. Verfahren zum Bearbeiten von plattenförmigen Werkstücken (T1,T2,T3) aus Holz, Holzwerkstoffen, Kunststoff oder dergleichen, bei dem die Werkstücke erfaßt, kontinuierlich entlang einer Bearbeitungsstrecke (B) geführt und dabei mit mindestens einem an der Bearbeitungsstrecke entlanggeführten Mittel zur Bearbeitung in Eingriff gebracht werden, wobei
- zur Relativpositionierung des mit dem jeweiligen Werkstück in Eingriff zu bringenden Mittels in einer ersten Phase über eine Steuereinrichtung (C1) das Mittel gegenüber dem jeweiligen Werkstück (T1,T2) hinsichtlich Relativbewegung und -position in eine vorgegebene Toleranzzone geführt wird,
- nach Erreichen der Toleranzzone der Bewegung des Mittels in einer weiteren Phase eine Feinbewegung bis zu einer Feinpositionierung des Mittels überlagert wird, und
- nach der Feinpositionierung der Eingriff durchgeführt wird.

2. Verfahren nach Anspruch 1,
**dadurch gekennzeichnet, daß** die Steuereinrichtung (C1) zur Führung des Mittels in die Toleranzzone die Schritte durchführt:
- sensorisch (Sv) Erfassen der Position des Werkstückes (T1,T2,T3);
- Einwirken (A1) auf die Position des Mittels derart, daß das Mittel in die Toleranzzone geführt und darin gehalten wird.

3. Verfahren nach Anspruch 2, **dadurch gekennzeichnet, daß** die Steuervorrichtung die folgenden Schritte ausführt:
- Berechnen einer Positionsvorgabe für das Mittel;
- sensorisch Erfassen (S1) der Position des Mittels;
- Regeln der Position des Mittels auf die Positionsvorgabe.

4. Verfahren nach Anspruch 2 oder 3,
**dadurch gekennzeichnet, daß** die Steuereinrichtung zur Feinpositionierung die Schritte durchführt:
- Erfassen, ob das Mittel in der Toleranzzone geführt wird; und
- falls das Mittel in der Toleranzzone geführt wird, Einwirken auf die Position des Mittels derart, daß diese mit einer Referenzposition des Werkstückes in Übereinstimmung gebracht wird.

5. Verfahren nach Anspruch 4, daurch gekennzeichnet, daß die Steuereinrichtung die folgenden Schritte ausführt:
- Erfassen (S2;Sv,Gv) einer Feinposition des Werkstückes (T1,T2,T3);
- Berechnen einer Feinpositionsvorgabe für das Mittel aus der erfaßten Feinposition des Werkstückes;
- Regeln der Position des Mittels auf die Feinpositionsvorgabe.

6. Verfahren nach Anspruch 4 oder 5, **dadurch gekennzeichnet, daß** die Erfassung der Feinposition des Werkstückes über einen gesonderten Feinpositionssensor (S2, Sv) vorgenommen wird.

7. Verfahren nach einem der Ansprüche 4 bis 6, **dadurch gekennzeichnet, daß** die Feinposition des Werkstückes relativ zur Position des Mittels erfaßt wird (S2).

8. Verfahren nach einem der Ansprüche 4 bis 6, **dadurch gekennzeichnet, daß** die Feinposition des Werkstückes relativ zu einem Maschinenchassis erfaßt wird (Sv).

9. Verfahren nach Anspruch 8, **gekennzeichnet durch** eine Erfassung einer Feinposition des Mittels relativ zu einem Maschinenchassis **durch** einen gesonderten Feinpositionssensor (S2).

10. Verfahren nach einem der Ansprüche 5 bis 9, **dadurch gekennzeichnet, daß** die Regelung des Mittels auf die Positionsvorgabe und die Regelung des Mittels auf die Feinpositionsvorgabe von demselben Regler (C3) durchgeführt wird.

11. Verfahren nach Anspruch 10, **dadurch gekennzeichnet, daß** nachdem das Mittel die Toleranzzone erreicht hat, eine Regelcharakteristik des Reglers (C3) umgeschaltet wird.

12. Vorrichtung zur Durchführung des Verfahren nach einem oder mehreren der Ansprüche 1 bis 11, mit
- einer Fördereinrichtung (Av, B) zum Erfassen und kontinuierlichen Führen der Werkstücke (T1, T2, T3) entlang einer Bearbeitungsstrecke,
- sowie mindestens einem im Bereich der Fördereinrichtung angeordneten Bearbeitungsaggregat (A1) mit mindestens einem Mittel (A2, K), welches zur Bearbeitung eines Werkstückes mit diesem in Eingriff gebracht werden kann;
- einer ersten Steuereinrichtung (C1), welche ausgebildet ist, zur Relativpositionierung des mit dem jeweiligen Werkstück in Eingriff zu bringenden Mittels in einer ersten Phase gegenüber dem jeweiligen Werkstück (T1,T2,T3) hinsichtlich Relativbewegung und -position das Mittel in eine vorgegebene Toleranzzone zu führen, und
- einer zusätzlichen Steuereinrichtung, welche ausgebildet ist, nach Erreichen der Toleranzzone der Bewegung des Mittels in einer weiteren Phase eine Feinbewegung bis zu einer Feinpositionierung des Mittels zu überlagern.

13. Vorrichtung nach Anspruch 12, **dadurch gekennzeichnet, daß** die erste Steuereinrichtung zur Führung des Mittels in die Toleranzzone umfaßt:
- einen Sensor (Gv, Sv) zur Erfassung der Position des Werkstückes; und
- einen Aktor (A1) zur Einwirkung auf die Position des Mittels derart, daß das Mittel in die Toleranzzone geführt und darin gehalten wird.

14. Vorrichtung nach Anspruch 13,
**dadurch gekennzeichnet, daß** die erste Steuervorrichtung umfaßt :
- einen Rechner (C2) zur Berechnung einer Positionsvorgabe für das Mittel;
- einen Sensor (S1) zur Erfassung der Position des Mittels; und
- einen Regler (C3) zur Regelung der Position des Mittels auf die Positionsvorgabe.

15. Vorrichtung nach Anspruch 13 oder 14,
**dadurch gekennzeichnet, daß** die Steuereinrichtung umfaßt:
- Einrichtungen (C2) zur Erfassung, ob das Mittel in der Toleranzzone geführt wird; und
- Einrichtungen (A1,C3), die ausgebildet sind, auf die Position des Mittels derart einzuwirken, daß diese mit einer Referenzposition des Werkstücks in Übereinstimmung gebracht wird, falls das Mittel in der Toleranzzone geführt wird.

16. Vorrichtung nach Anspruch 15,
**dadurch gekennzeichnet, daß** die Steuereinrichtung umfaßt:
- eine Einrichtung (S2,Sv) zur Erfassung einer Feinposition des Werkstückes (T1 bis T3);
- eine Einrichtung (C2) zur Berechnung einer Feinpositionsvorgabe für das Mittel aus der erfaßten Feinposition des Werkstückes; und
- einen Regler (C3) zur Regelung der Position des Mittels auf die Feinpositionsvorgabe.

17. Vorrichtung nach Anspruch 15 oder 16,
**dadurch gekennzeichnet, daß** zur Erfassung der Feinposition des Werkstückes ein gesonderter Feinpositionssensor (Sv,S2) vorgesehen ist.

18. Vorrichtung nach Anspruch 16 oder 17,
**dadurch gekennzeichnet, daß** die Einrichtung (S2) zur Erfassung der Feinposition des Werkstückes (T1) derart angeordnet ist, daß die Feinposition des Werkstückes relativ zur Position des Mittels erfaßt wird.

19. Vorrichtung nach Anspruch 16 oder 17,
**dadurch gekennzeichnet, daß** die Einrichtung (Sv) zur Erfassung der Feinposition des Werkstückes derart angeordnet ist, daß die Feinposition des Werkstückes relativ zu einem Maschinenchassis erfaßt wird.

20. Vorrichtung nach Anspruch 19,
**gekennzeichnet durch** einen gesonderten Feinpositionssensor (S2) zur Erfassung einer Feinposition des Mittels relativ zu einem Maschinenchassis.

21. Vorrichtung nach einem der Ansprüche 16 bis 20, **gekennzeichnet durch** einen Regler (C3), der ausgebildet ist, sowohl die Regelung des Mittels auf die Positionsvorgabe als auch die Regelung des Mittels auf die Feinpositionsvorgabe gemäß jeweiliger Konfigurationsvorgaben durchzuführen.

22. Vorrichtung nach Anspruch 21,
**gekennzeichnet durch** eine Einrichtung (C2) zum Umkonfigurieren der Regelcharakteristik des Reglers, nachdem das Mittel die Toleranzzone erreicht hat.

## Claims

1. Method for working sheet-like work pieces (T1, T2, T3) made of wood, timber products, synthetic material or the like, in which the work pieces are picked up, guided continuously along a working zone (B) and in the process brought into engagement with at least one working means which is guided along the working zone, wherein
- for relative positioning of the means which is to be brought into engagement with the respective work piece, in a first stage via a control device (C1) the means is guided relative to the respective work piece (T1, T2) with respect to relative movement and position into a predetermined tolerance zone,
- after reaching the tolerance zone, in a further stage a fine movement is superimposed on the movement of the means until fine positioning of the means, and
- after fine positioning, engagement is carried out.

2. Method according to claim 1, **characterised in that** the control device (C1) for guiding the means into the tolerance zone performs the steps of:
- sensor (Sv) detection of the position of the work piece (T1, T2, T3);
- action (A1) on the position of the means such that the means is guided into the tolerance zone and held therein.

3. Method according to claim 2, **characterised in that** the control device performs the following steps:
- calculation of a position setting for the means;
- sensor detection (S1) of the position of the means;
- regulation of the position of the means to the position setting.

4. Method according to claim 2 or 3, **characterised in that** the control device for fine positioning performs the steps of:
- detection whether the means is being guided in the tolerance zone; and
- in the event that the means is being guided in the tolerance zone, action on the position of the means such that this position is brought into line with a reference position of the work piece.

5. Method according to claim 4, **characterised in that** the control device performs the following steps:
- detection (S2; Sv, Gv) of a fine position of the work piece (T1, T2, T3);
- calculation of a fine position setting for the means from the detected fine position of the work piece;
- regulation of the position of the means to the fine position setting.

6. Method according to claim 4 or 5, **characterised in that** detection of the fine position of the work piece is performed by a separate fine position sensor (S2, Sv).

7. Method according to any of claims 4 to 6, **characterised in that** the fine position of the work piece relative to the position of the means is detected (S2).

8. Method according to any of claims 4 to 6, **characterised in that** the fine position of the work piece relative to a machine chassis is detected (Sv).

9. Method according to claim 8, **characterised by** detection of a fine position of the means relative to a machine chassis by a separate fine position sensor (S2).

10. Method according to any of claims 5 to 9, **characterised in that** regulation of the means to the position setting and regulation of the means to the fine position setting are performed by the same regulator (C3).

11. Method according to claim 10, **characterised in that**, after the means has reached the tolerance zone, a regulating characteristic of the regulator (C3) is switched.

12. Apparatus for carrying out the method according to one or more of claims 1 to 11, with
- a conveying device (Av, B) for picking up and continuously guiding the work pieces (T1, T2, T3) along a working zone,
- and at least one working unit (A1) arranged in the region of the conveying device, with at least one means (A2, K) which for working of a work piece can be brought into engagement with the latter;
- a first control device (C1) which is designed to guide the means in a first stage into a predetermined tolerance zone relative to the respective work piece (T1, T2, T3) with respect to relative movement and position, for relative positioning of the means to be brought into engagement with the respective work piece, and
- an additional control device which is designed, after reaching the tolerance zone, in a further stage to superimpose a fine movement on the movement of the means until fine positioning of the means.

13. Apparatus according to claim 12, **characterised in that** the first control device for guiding the means into the tolerance zone includes:
- a sensor (Gv, Sv) for detection of the position of the work piece; and
- an actuator (A1) for action on the position of the means such that the means is guided into the tolerance zone and held therein.

14. Apparatus according to claim 13, **characterised in that** the first control device includes:
- a computer (C2) for calculation of a position setting for the means;
- a sensor (S1) for detection of the position of the means; and
- a regulator (C3) for regulation of the position of the means to the position setting.

15. Apparatus according to claim 13 or 14, **characterised in that** the control device includes:
- devices (C2) for detection whether the means is being guided in the tolerance zone; and
- devices (A1, C3) which are designed to act on the position of the means such that this position is brought into line with a reference position of the work piece in the event that the means is being guided in the tolerance zone.

16. Method according to claim 15, **characterised in that** the control device includes:
- a device (S2, Sv) for detection of a fine position of the work piece (T1 to T3);
- a device (C2) for calculation of a fine position setting for the means from the detected fine position of the work piece; and
- a regulator (C3) for regulation of the position of the means to the fine position setting.

17. Apparatus according to claim 15 or 16, **characterised in that** for detection of the fine position of the work piece a separate fine position sensor (S2, Sv) is provided.

18. Apparatus according to claim 16 or 17, **characterised in that** the device (S2) for detection of the fine position of the work piece (T1) is arranged in such a way that the fine position of the work piece relative to the position of the means is detected.

19. Apparatus according to claim 16 or 17, **characterised in that** the device (Sv) for detection of the fine position of the work piece is arranged in such a way that the fine position of the work piece relative to a machine chassis is detected.

20. Apparatus according to claim 19, **characterised by** a separate fine position sensor (S2) for detection of a fine position of the means relative to a machine chassis.

21. Apparatus according to any of claims 16 to 20, **characterised by** a regulator (C3) which is designed to perform both regulation of the means to the position setting and regulation of the means to the fine position setting according to respective configuration settings.

22. Apparatus according to claim 21, **characterised by** a device (C2) for reconfiguring the regulating characteristic of the regulator after the means has reached the tolerance zone.

## Revendications

1. Procédé d'usinage de pièces (T1, T2, T3) en forme de plaque, en bois, en matériau ligneux, en matière synthétique ou analogues, dans lequel les pièces sont saisies, guidées de façon continue le long d'une piste d'usinage (B) et mises en prise alors avec au moins un moyen d'usinage, guidé le long de la piste d'usinage, où
- pour assurer le positionnement relatif du moyen à mettre en prise avec la pièce respective, en une première phase, par l'intermédiaire d'un dispositif de commande (C1), le moyen est guidé par rapport à la pièce (T1, T2) respective, en se situant dans une plage de tolérance prédéterminée du point de vue du déplacement relatif et de la position relative,
- à l'atteinte de la plage de tolérance du déplacement du moyen, en une autre phase, un déplacement fin est superposé jusqu'à obtenir un positionnement fin du moyen, et
- la mise en prise est effectuée une fois le positionnement fin achevé.

2. Procédé selon la revendication 1, **caractérisé en ce que** le dispositif de commande (C1) effectue les étapes ci-après pour assurer le guidage du moyen dans les limites de la plage de tolérance :
- détection sensorique (Sv) de la position de la pièce (T1, T2, T3) ;
- action (A1) sur la position du moyen, de manière que le moyen soit guidé dans la plage de tolérance et y soit maintenu.

3. Procédé selon la revendication 2, **caractérisé en ce que** le dispositif de commande exécute les étapes ci-après :
- calcul d'une affectation de position pour le moyen ;
- détection sensorique (SI) de la position du moyen ;
- régulation de la position du moyen selon l'affectation de position.

4. Procédé selon la revendication 2 ou 3, **caractérisé en ce que** le dispositif de commande exécute les étapes ci-après pour effectuer le positionnement fin :
- détection du fait que le moyen est guidé dans la plage de tolérance ; et
- dans le cas où le moyen est guidé dans la plage de tolérance, action sur la position du moyen, de manière que celui-ci soit placé en coïncidence avec une position de référence de la pièce.

5. Procédé selon la revendication 4, **caractérisé en ce que** le dispositif de commande exécute les étapes suivantes :
- détection (S2 ; Sv, Gv) d'une position fine de la pièce (T1, T2, T3) ;
- calcul d'une affectation de position fine pour le moyen, d'après la position fine détectée de la pièce ;
- réglage de position du moyen selon l'affectation de position fine.

6. Procédé selon la revendication 4 ou 5, **caractérisé en ce que** la détection de la position fine de la pièce est effectuée par un capteur de position fine (S2, Sv) spécial.

7. Procédé selon l'une des revendications 4 à 6, **caractérisé en ce que** la position fine de la pièce par rapport à la position du moyen est détectée (S2).

8. Procédé selon l'une des revendications 4 à 6, **caractérisé en ce que** la position fine de la pièce par rapport à un châssis de machine est détectée (Sv).

9. Procédé selon la revendication 8, **caractérisé par** une détection d'une position fine du moyen par rapport à un châssis de machine, au moyen d'un capteur de position fine (S2) spécial.

10. Procédé selon l'une des revendications 5 à 9, **caractérisé en ce que** le réglage du moyen à l'affectation de position et le réglage du moyen à l'affectation de position fine sont effectués par le même régulateur (C3).

11. Procédé selon la revendication 10, **caractérisé en ce que**, après que le moyen ait atteint la plage de tolérance, une caractéristique de réglage du régulateur (C3) est modifiée par commutation.

12. Dispositif de mise en oeuvre du procédé selon l'une ou plusieurs des revendications 1 à 11, avec
- un dispositif de transport (Av, B) pour détecter et guider de façon continue les pièces (T1, T2, T3) le long d'une piste d'usinage ;
- ainsi qu'au moins un groupe d'usinage (A1) disposé dans la zone du dispositif de transport, avec au moins un moyen (A2, K) qui, pour effectuer l'usinage d'une pièce, peut être placé en prise avec celle-ci,
- un premier dispositif de commande (C1), réalisé pour guider le moyen dans une plage de tolérance prédéterminée, afin d'assurer le positionnement relatif du moyen à mettre en prise avec la pièce respective, en une première phase, par rapport à la pièce respective (T1, T2, T3), du point de vue du déplacement relatif et de la position relative, et
- un dispositif de commande supplémentaire réalisé de manière que, après atteinte de la plage de tolérance du déplacement du moyen, lors d'une autre phase, un déplacement fin soit superposé jusqu'à obtenir un positionnement fin du moyen.

13. Dispositif selon la revendication 12, **caractérisé en ce que** le premier dispositif de commande devant guider le moyen dans la plage de tolérance comprend :
- un capteur (Gv, Sv) pour détecter la position de la pièce ; et
- un actionneur (A1) pour agir sur la position du moyen, de manière que le moyen soit guidé dans la plage de tolérance et y soit maintenu.

14. Dispositif selon la revendication 13, **caractérisé en ce que** le premier dispositif de commande comprend :
- un ordinateur (C2), pour calculer une affectation de position pour le moyen ;
- un capteur (S1), pour détecter la position du moyen ; et
- un régulateur (C3), pour régler la position du moyen à l'affectation de position.

15. Dispositif selon la revendication 13 ou 14, **caractérisé en ce que** le dispositif de commande comprend :
- des dispositifs (C2), pour détecter le fait que le moyen est guidé dans la plage de tolérance ; et
- des dispositifs (A1, C3), réalisés pour agir sur la position du moyen, de manière que celui-ci soit placé en coïncidence avec une position de référence de la pièce, dans le cas où le moyen est guidé dans la plage de tolérance.

16. Dispositif selon la revendication 15, **caractérisé en ce que** le dispositif de commande comprend :
- un dispositif (S2, Sv), pour détecter une position fine de la pièce (T1 à T3) ;
- un dispositif (C2), pour calculer une affectation de position fine pour le moyen, à partir de la position fine détectée de la pièce ; et
- un régulateur (C3), pour régler la position du moyen à l'affectation de position fine.

17. Dispositif selon la revendication 15 ou 16, **caractérisé en ce qu'**un capteur de position fine (Sv, S2) séparé est prévu pour la détection de la position fine de la pièce.

18. Dispositif selon la revendication 16 ou 17, **caractérisé en ce que** le dispositif (S2) devant détecter la position fine de la pièce (T1) est disposé de manière que la position fine de la pièce par rapport à la position du moyen soit détectée.

19. Dispositif selon la revendication 16 ou 17, **caractérisé en ce que** le dispositif (Sv) devant assurer la détection de la position fine de la pièce est disposé de manière que la position fine de la pièce par rapport à un châssis de machine soit détectée.

20. Dispositif selon la revendication 19, **caractérisé par** un capteur de position fine (S2) séparé, pour détecter une position fine du moyen par rapport à un châssis de machine.

21. Dispositif selon l'une des revendications 16 à 20, **caractérisé par** un régulateur (C3), réalisé pour effectuer tant la régulation du moyen à l'affectation de position, qu'également la régulation du moyen à l'affectation de la position fine, selon des attributions de configuration respectives.

22. Dispositif selon la revendication 21, **caractérisé par** un dispositif (C2), pour reconfigurer la caractéristique de réglage du régulateur, après que le moyen ait atteint la plage de tolérance.
